# EUROPEAN PATENT APPLICATION

(11) **EP 3 975 350 A1**
(43) Date of publication of application: **30.03.2022**
(21) Application number: 21182664.9
(22) Date of filing: 30.06.2021
(51) Int. Cl.: H01R 25/16, F21V 27/00, H02G 11/00

(54) **WATERPROOF POWER SUPPLY TRACK**

(30) Priority: 27.09.2020 CN 202022161278 U
(71) Applicant: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: Yang, Jun, Ningbo, 315103 (CN)
(74) Representative: 2K Patentanwälte Blasberg Kewitz & Reichel

(57) **Abstract**

The embodiments discloses a waterproof power supply track, it includes a strip-shaped power supply cavity and a power taking module. The power taking module includes a power taking head, a power supply part, a positive flexible wire, and a negative flexible wire. The waterproof power supply track is provided with a strip-shaped power supply cavity for accommodating the power taking module, which plays a role of protecting the power taking module, and makes the shelf power supply clean and safe.

## Description

### RELATED APPLICATION

This application claims priority to a Chinese Patent Application No. CN 202022161278.0, filed on September 27, 2020.

### FIELD OF THE TECHNOLOGY

The embodiments relates to the technical field of lighting power supply, in particular to a waterproof power supply track.

### BACKGROUND

In the context of energy conservation and environmental protection, LED lamps are increasingly used in the home and commercial lighting fields because of their high light-emitting efficiency and good light-gathering performance.

shelf lighting is a kind of commercial lighting. In the installation of existing shelf lighting, there are problems such as messy and scattered power wiring, complicated installation process and time-consuming, and it takes up more shelf space after installation, resulting in waste of space and the problem of low utilization. In order to solve these problems, some researchers have proposed to install power supply tracks in the shelves to cooperate with the power-taking heads to avoid messy and scattered power wiring. However, for such products, in order to facilitate the power-taking of the power heads, The conductive strips in the power supply tracks are bare, easy to be corroded and damaged, and cannot be waterproof, and it is difficult to apply to areas that require waterproofing.

Therefore, it has important application value to develop a waterproof power-taking method.

### BRIEF SUMMARY

In view of this, the present embodiments provide a waterproof power supply track to solve the above technical problems.

A waterproof power supply track, characterized in that it comprises:
a strip-shaped power supply cavity, provided with a strip-shaped mounting hole extending along its length direction of its side wall;
a power taking module, which is arranged on the strip-shaped power supply cavity, comprising:
a power taking head, which is movably arranged in the strip-shaped mounting hole and includes an external part arranged outside the strip-shaped power supply cavity and an internal connection part that extends into the strip-shaped power supply cavity;
a power supply part, which is fixedly arranged in the strip-shaped power supply cavity;
a positive flexible wire, being with one end electrically connected to the power supply part, and the other end is electrically connected to the internal connection part;
a negative flexible wire, being with one end electrically connected to the power supply part, and the other end electrically connected to the internal connection part.
advantageously, the positive flexible wire and/or the negative flexible wire are insulated wires.
advantageously, the hardness of the insulating layer of the insulated wire ranges from Shore A 50°to 70°.
advantageously, the strip-shaped power supply cavity is a flat channel with a width k and a thickness h, and the left and right sides define the width, the front and back sides define the thickness.
advantageously, at least one of the positive flexible wire or/and the negative flexible wire is drawn from the power supply part and extended along the length direction of the strip-shaped power supply cavity, bent and extended in the opposite direction, and then connect with the internal connection part.
advantageously, the positive flexible wire and the negative flexible wire have the same length and are arranged side by side and synchronously bent.
advantageously, a portion of the positive flexible wire and the negative flexible wire (204) close to the internal connection part are fastened into one piece.
advantageously, the outer contour of the internal connection part is at least partially abut close to the strip-shaped power supply cavity to form a friction force to position the power taking head.
advantageously, a plurality of the strip-shaped mounting holes are provided along the length direction of the strip-shaped power supply cavity, and the power taking modules in match have the same number.
advantageously, the strip-shaped power supply cavity is provided with a main power supply part at the end, and a main wire lead out from the main power supply part into the strip-shaped power supply cavity, and the power supply part is electrically connected to the main wire.

Technical effects of the embodiments:

The waterproof power supply track of the embodiments is provided with a strip-shaped power supply cavity for accommodating the power taking module, which plays the role of protecting the power taking module and makes the shelf power supply clean and safe.

### BRIEF DESCRIPTION OF THE DRAWINGS

The following describes the embodiments of the present invention in conjunction with the accompanying drawings, in which:
FIG. 1 is a schematic diagram of the structure of the waterproof power supply track of this embodiment.
FIG. 2 is a schematic diagram of the exploded structure of the waterproof power supply track of the embodiment partially decomposed.
FIG. 3 is a schematic structural diagram of another embodiment of the waterproof power supply track (being with the top plate hidden).
FIG. 4 is a schematic diagram of the structure of the power taking head of the waterproof power supply track of the embodiment of FIG. 3 after being moved to the right.
FIG. 5 is a schematic cross-sectional view of a cross-section of a waterproof power supply track at a power taking head according to another embodiment.

### DETAILED DESCRIPTION

Specific embodiments of the present invention will be described in further detail below based on the drawings. It should be understood that the description of the embodiments of the present invention herein is not intended to limit the protection scope of the present invention.

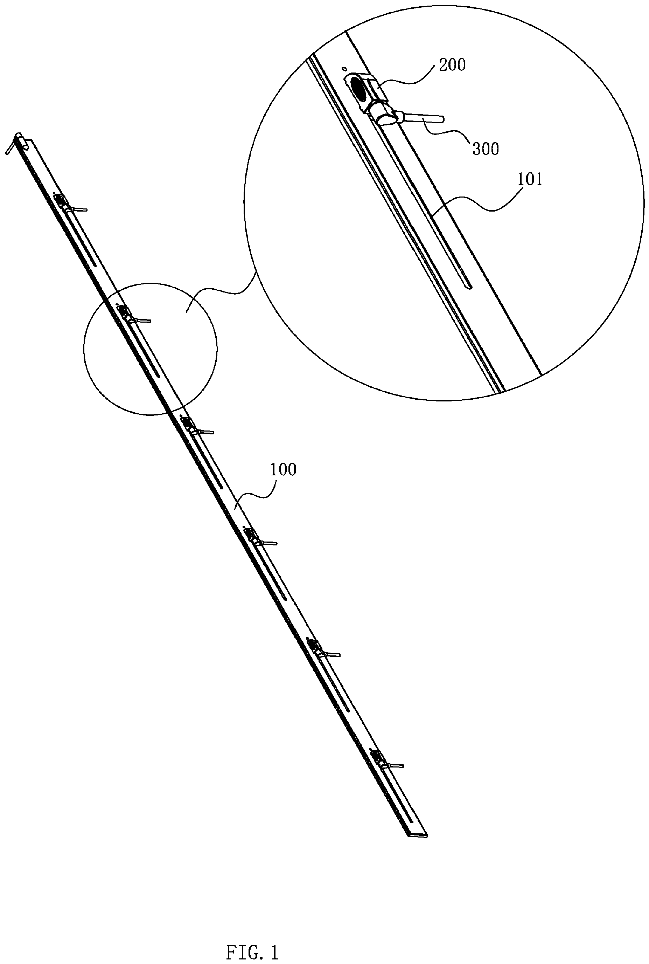

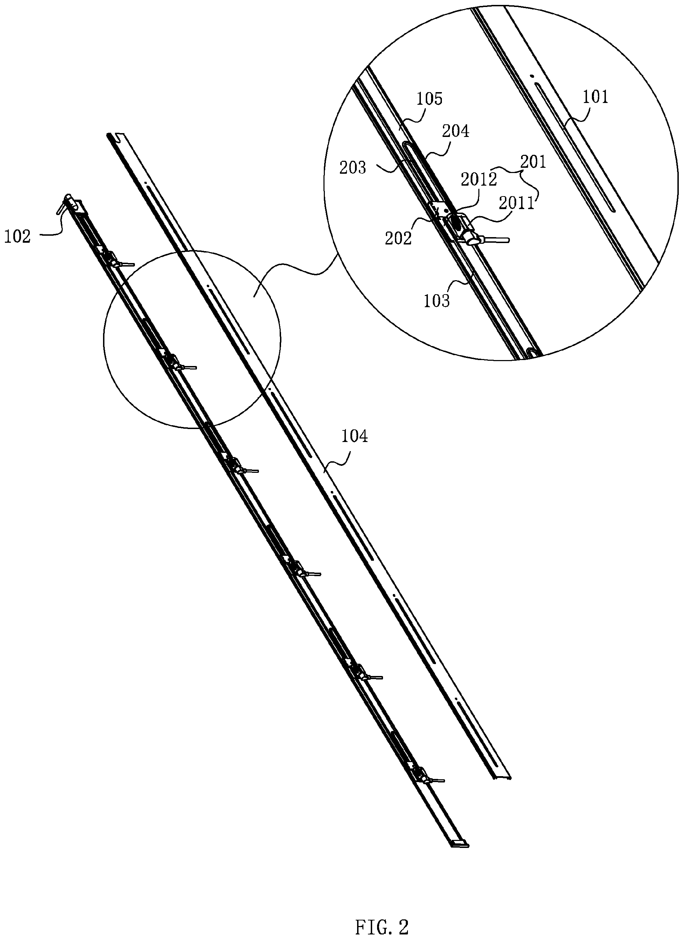

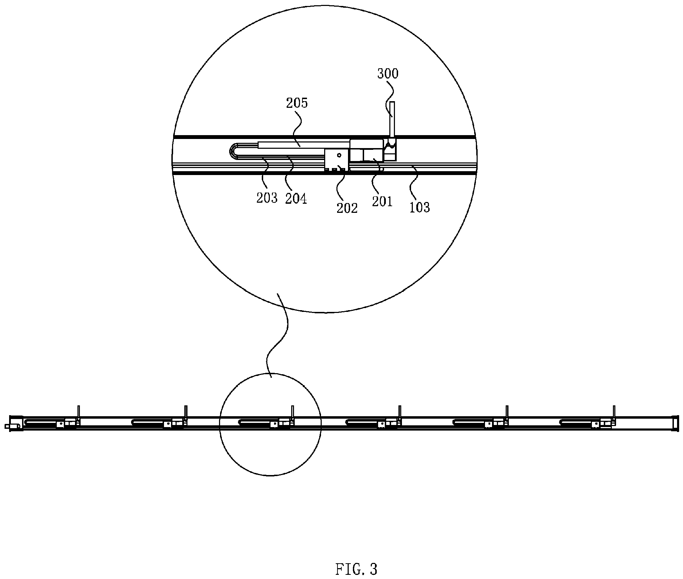

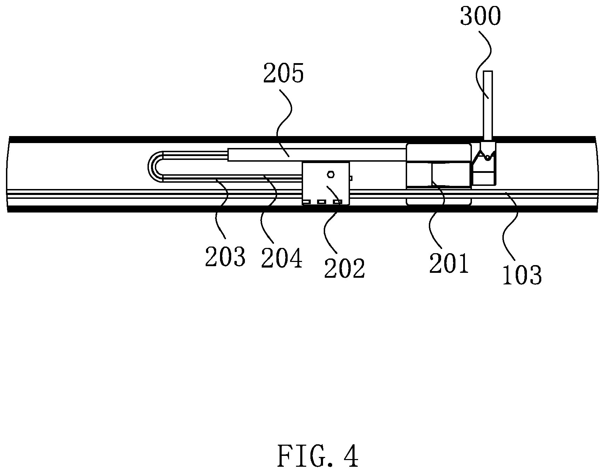

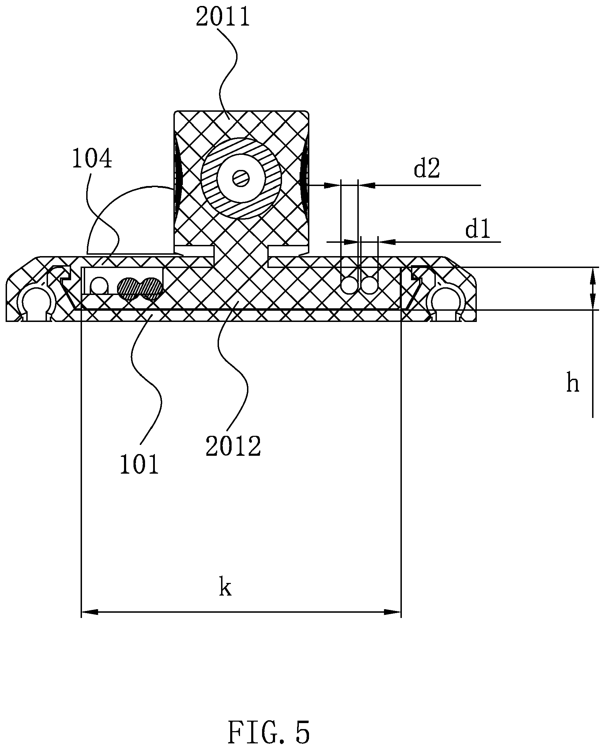

As shown in FIG.1 to FIG.5, the waterproof power supply track of this embodiment includes a strip-shaped power supply cavity 100 and a power taking module 200. The side wall of the strip-shaped power supply cavity 100 is provided with a strip-shaped mounting hole 101 extending along its length direction. The strip-shaped power supply cavity 100 is used to supply power at a required position and its length can be set according to the need, and the cavity body of the strip-shaped power supply cavity 100 is integrally formed or formed by a plurality of plates fixedly connected. In this embodiment, the strip-shaped power supply cavity 100 is formed by a top plate 104 and a bottom plate 105 fastening with each other, and the top plate 104 and the bottom plate 105 are provided with a matching clamping structure on both sides. The strip-shaped power supply cavity 100 shields and protects the internal structure. In this embodiment, the strip-shaped power supply cavity 100 is a flat channel with a width k and a thickness h, that is, it has a certain width k on the left and right sides and a certain thickness h on the front and rear sides, thus reducing the occupied volume. Of course, it can also be round, polygonal, and other shapes, which can be set according to actual installation needs.

The power taking module 200 is arranged on the strip-shaped power supply cavity 100 and includes a power taking head 201, a power supply part 202, a positive flexible wire 203 and a negative flexible wire 204. The power taking head 201 is movably arranged in the strip-shaped mounting hole 101, and the power taking head 201 includes an external part 2011 arranged outside the strip-shaped power supply cavity 100 and an internal connection part 2012 that extends into the strip-shaped power supply cavity 100. The external part 2011 is used to provide power to the electrical appliance, and is in the form of a plug or a socket. In this embodiment, the external part 2011 is in the form of a socket and equipped with an external wire 300. The internal connection part 2012 is used to take power from the strip-shaped power supply cavity 100. In this embodiment, a power supply part 202 is fixedly arranged in the strip-shaped power supply cavity 100 for supplying power. One end of the positive flexible wire 203 is electrically connected to the power supply part 202 and the other end is electrically connected to the internal connection part 2012; One end of the negative flexible wire 204 is electrically connected to the power supply part 202 and the other end of the negative flexible wire 204 is electrically connected to the internal connection part 2012. In this way, electric power is transmitted from the power supply part 202 to the power taking head 201, and the electric appliance is electrically connected to the external part 2011 to realize conduction.

During the movement of the power taking head 201, the positive flexible wire 203 and the negative flexible wire 204 are bent and stretched, and the power taking head 201 is movably arranged in the strip-shaped mounting hole 101 so that the power taking position can be changed to adapt to the electrical appliances, thereby making the external wire 300 shorter, which makes the internal power supply layout cleaner and safer when it is used in the shelf. In addition, the positive flexible wire 203 and the negative flexible wire 204 are both located in the strip-shaped power supply cavity 100, which is not easy to be polluted and damaged, and can increase the service life of the product.

In this embodiment, the positive flexible wire 203 and the negative flexible wire 204 are insulated wires, which is convenient to obtain and has a low cost, and has an insulating outer layer with a certain waterproof function, which makes the product waterproof.

In order to avoid entanglement of the insulated wire, in another embodiment, the hardness of the insulating layer of the insulated wire ranges from Shore A 50°to 70°. In this embodiment, the hardness of the insulating layer of the insulated wire is Shore A 60°. The insulated wire with the above-mentioned hardness has a certain degree of toughness while maintaining flexibility, is easy to recover after bending, and is not easy to be entangled with each other. Specifically, the insulating layer of the insulated wire is made of FEP (Fluorinated ethylene propylene), of course, other materials with the same hardness can also be used.

In another embodiment, the diameter of the positive flexible wire 203 is d1, and the diameter of the negative flexible wire 204 is d2, d1+d2<h≤2(d1+d2). After the flat channel thickness h is set as described above, the positive flexible wire 203 and the negative flexible wire 204 are restricted from moving in the thickness direction, so that they are not easily wound.

In another embodiment, the positive flexible wire 203 and the negative flexible wire 204 are drawn from the power supply part 202 and extend along the length direction of the strip-shaped power supply cavity 100, bend and extend in the opposite direction, and then connect with the internal connection part 2012. The positive flexible wire 203 and the negative flexible wire 204 have the same length and are arranged side by side and synchronously bent.

In another embodiment, the portion of the positive flexible wire 203 and the negative flexible wire 204 close to the internal connection part 2012 are fastened into one piece. The fastening method of the fastening part 205 is either thermoplastic a shell or wrapping tape to increase the hardness of this part and maintain a straight line.

In order to facilitate the positioning of the power taking head 201, at least part of the outer contour of the internal connection part 2012 abuts the strip-shaped power supply cavity 100 to form a certain friction force to position the power taking head 201. In this embodiment, the outer contour of the internal connection part 2012 is in close contact with the strip-shaped power supply cavity 100.

In order to meet the demand of power taking in multiple different positions, in this embodiment, the strip-shaped mounting holes 101 are provided with a plurality along the length direction of the strip-shaped power supply cavity 100, and the matched power taking modules 200 are provided with the same number.

In order to facilitate the transmission of power from the outside to the power supply part 202, in this embodiment, the strip-shaped power supply cavity 100 is provided with a main power supply part 102 at the end, and a main wire 103 lead out from the main power supply part 102 into the strip-shaped power supply cavity 100, the power supply part 202 is electrically connected to the main wire 103, and the input position of the external power can be set as required.

The above are only the preferred embodiments of the present embodiments, and are not used to limit the scope of protection of the present embodiments. Any modification, equivalent replacement or improvement within the spirit of the present embodiments, etc., shall be covered by the scope of the claims of the present embodiments.

## Claims

1. A waterproof power supply track, **characterized in that** it comprises:
a strip-shaped power supply cavity (100), provided with a strip-shaped mounting hole (101) extending along its length direction on its side wall;
a power taking module (200), which is arranged on the strip-shaped power supply cavity (100), comprising:
a power taking head (201), which is movably arranged in the strip-shaped mounting hole (101) and includes an external part (2011) arranged outside the strip-shaped power supply cavity (100) and an internal connection part (2012) that extends into the strip-shaped power supply cavity (100);
a power supply part (202), which is arranged in the strip-shaped power supply cavity (100);
a positive flexible wire (203), being with one end electrically connected to the power supply part (202), and the other end is electrically connected to the internal connection part (2012);
a negative flexible wire (204), being with one end electrically connected to the power supply part (202), and the other end electrically connected to the internal connection part (2012).

2. The waterproof power supply track as claimed in claim 1, wherein the positive flexible wire (203) and/or the negative flexible wire (204) are insulated wires.

3. The waterproof power supply track as claimed in claim 2, wherein the hardness of the insulating layer of the insulated wire ranges from Shore A 50°to 70°.

4. The waterproof power supply track as claimed in any one of claims 1 to 3, wherein the strip-shaped power supply cavity (100) is a flat channel with a width k and a thickness h, and the left and right sides define the width, the front and back sides define the thickness.

5. The waterproof power supply track as claimed in any one of preceding claims,
wherein at least one of the positive flexible wire (203) or/and the negative flexible wire (204) is drawn from the power supply part (202) and extended along the length direction of the strip-shaped power supply cavity (100), bent and extended in the opposite direction, and then connect with the internal connection part (2012).

6. The waterproof power supply track as claimed in any one of preceding claims,
wherein the positive flexible wire (203) and the negative flexible wire (204) have the same length and are arranged side by side and synchronously bent.

7. The waterproof power supply track as claimed in any one of preceding claims,
wherein a portion of the positive flexible wire (203) and the negative flexible wire (204) close to the internal connection part (2012) are fastened into one piece.

8. The waterproof power supply track as claimed in any one of preceding claims, wherein a
outer contour of the internal connection part (2012) is at least partially abut close to the strip-shaped power supply cavity (100) to form a friction force to position the power taking head (201).

9. The waterproof power supply track as claimed in any one of c preceding claims,
wherein a plurality of the strip-shaped mounting holes (101) are provided along the length direction of the strip-shaped power supply cavity (100), and the power taking modules (200) in match have the same number.

10. The waterproof power supply track as claimed in any one of the preceding claims,
wherein the strip-shaped power supply cavity (100) is provided with a main power supply part (102) at one end, and a main wire (103) is lead out from the main power supply part (102) into the strip-shaped power supply cavity (100), and the power supply part (202) is electrically connected to the main wire (103).
